# FASCICULE DE BREVET EUROPEEN

(11) **EP 0 559 568 B1**
(45) Date de publication et mention de la délivrance du brevet: **06.12.1995**
(21) Numéro de dépôt: 93400564.6
(22) Date de dépôt: 04.03.1993
(51) Int. Cl.: F16B 3/00, B63B 29/02

(54) **Ancrage d'une structure en matériaux composites sur une structure métallique**
Verankerung einer Struktur aus Verbundwerkstoff auf einer metallischen Struktur
Anchoring of a composite structure on a metallic structure

(30) Priorité: 05.03.1992 FR 9202640
(43) Date de publication de la demande: 08.09.1993
(73) Titulaire: ETAT FRANCAIS Représenté par le délégué général pour l'armement, F-00460 Armées (FR)
(72) Inventeur: Le Lan, Jean-Yves, F-56270 Ploemeur (FR); Livory, Pierre, F-56850 Caudan (FR); Mauvais, Alain, F-56700 Hennebont (FR); Le Sauce, Rémi, F-56600 Lanester (FR); Le Mezo, Franck, 56260 Larmor-Plage (FR)

(56) Documents cités:
- CH-A- 472 626
- CH-A- 490 618
- DE-A- 2 416 898
- FR-A- 2 629 149

## Description

La présente invention concerne un dispositif d'ancrage d'une structure en matériaux composites sur une structure métallique notamment pour l'assemblage de superstructures en matériaux composites sur une coque métallique de navire. L'invention concerne également un procédé de réalisation de ce dispositif d'ancrage.

L'utilisation des matériaux composites s'est généralisée depuis quelques années pour la réalisation d'éléments de structure utilisés par exemple dans la construction des superstructures de navires. Ces éléments de structure se présentent généralement sous la forme de matériaux composites de type sandwich ou de type monolithique. Il convient d'assembler ces éléments de structure par des moyens capables d'assurer la tenue mécanique lorsque le navire est soumis à des efforts généraux et locaux.

On connaît des procédés d'assemblage où les superstructures en matériaux composites sont assemblées par boulonnage sur la coque en acier. L'état de la technique s'est naturellement orienté vers ces procédés puisque le soudage direct des matériaux composites sur une structure métallique n'est pas réalisable. Cependant la résistance à la fatigue de l'assemblage par boulonnage est souvent limitée dans le cas de structures de grandes dimensions. De plus l'assemblage par boulonnage seul est source de reliefs inacceptables pour la signature équivalente radar dans le cas des applications militaires.

On connaît également le brevet CH-A-472 626 qui décrit un procédé d'assemblage d'un matériau en feuille et d'un profilé, et le dispositif obtenu par ce procédé, appliqués à la réalisation d'éléments de toiture. Ce dispositif comporte notamment un matériau en feuille dont le bord, présentant des pliures longitudinales ou à angle droit, est introduit dans une fente d'un profilé creux d'une structure métallique et solidarisé avec ce dernier par une masse de liaison durcissable remplissant en totalité le profilé.

La forme extérieure irrégulière de cet assemblage ainsi réalisé, ne permet pas d'assurer la coplanéité des surfaces extérieures du profilé et du matériau en feuille, pour obtenir, au niveau de l'assemblage, une continuité de forme indispensable notamment au niveau du bordé incliné de coques de navires.

Un autre dispositif dont les éléments sont solidarisés par une masse durcissable est connu de CH-A-490618.

L' invention a pour but de supprimer les inconvénients de l'assemblage par boulonnage en proposant un dispositif et procédé d'ancrage d'une structure en matériaux composites sur une structure métallique permettant le montage de structures composites entièrement terminées et partiellement prééquipées dans des ateliers spécifiques sur des structures métalliques.

Pour ce faire l'invention propose un dispositif d'ancrage d'une structure en matériaux composites du type monolithique sur une structure métallique, comportant au moins un épaulement, pratiqué sur l'extrémité ancrée d'une structure en matériaux composites, calé au moyen d'une matière coulée durcissable entre deux profilés métalliques solidaires d'une structure métallique à l'une de leur extrémité et convergents vers leur autre extrémité libre par inclinaison d'au moins un des deux profilés vers le second vertical, la structure en matériaux composites du type monolithique s'écartant avant son extrémité ancrée vers l'intérieur pour assurer la coplanéité de la surface extérieure de la structure en matériaux composites du type monolithique et de la surface extérieure du profilé métallique incliné.

L'invention propose également un dispositif d'ancrage d'une structure en matériaux composites du type sandwich sur une structure métallique, comportant au moins un épaulement, pratiqué sur l'extrémité ancrée d'une structure en matériaux composites, calé au moyen d'une matière coulée durcissable entre deux profilés métalliques solidaires d'une structure métallique à l'une de leur extrémité et convergents vers leur autre extrémité libre par inclinaison d'au moins un des deux profilés vers le second vertical, la structure en matériaux composites du type sandwich comportant un rétrécissement avant son extrémité ancrée composée de matériaux composites monolithiques, pour assurer la coplanéité de la surface extérieure de la structure en matériaux composites du type sandwich et de la surface extérieure du profilé métallique incliné.

La matière coulée durcissable est préférentiellement une résine, une résine chargée ou un mortier.

Préférentiellement la structure en matériaux composites comporte à son extrémité ancrée un épaulement double par drapage avec des strates de matériaux composites monolithiques en forme de U.

Selon une variante possible de l'invention, l'extrémité ancrée est positionnée par rapport au profilé incliné, au profilé vertical et à la structure métallique, au moyen d'un boulonnage entre une contre plaque usinée en contre-dépouille et un prolongement du profilé métallique vertical enserrant une portion du type monolithique de la structure en matériaux composites.

Le dispositif est avantageusement appliqué à l'assemblage de superstructures en matériaux composites sur une coque métallique de navire ou inversement.

Le dispositif est aussi avantageusement appliqué à l'assemblage de ponts ou cloisons ou encore à des modules de transports ou cadres en matériaux composites avec un plancher en matériau métallique.

L'invention propose également un procédé de réalisation du dispositif d'ancrage appliqué à l'assemblage de superstructures en matériaux composites sur une coque métallique de navire, le procédé est caractérisé en ce qu'il comporte les étapes successives suivantes :
- positionnement des superstructures composites prépercées par rapport aux profilés métalliques incliné et vertical et à la structure métallique composant le bordé métallique du navire au moyen du boulonnage,
- première coulée de matière coulée durcissable à hauteur du profilé métallique incliné,
- seconde coulée après retrait du boulonnage, à hauteur du prolongement du profilé métallique vertical,
- éventuellement contre-perçage suivant les superstructures du prolongement du profilé métallique vertical,
- mise en place du produit d'étanchéité,
- éventuellement remise en place du boulonnage avec la contre plaque usinée en contre-dépouille.

D'autres caractéristiques et avantages de l'invention apparaîtront à la lecture suivante de la description détaillée de quelques exemples de réalisation non limitatifs de l'invention et au vu du dessin annexé sur lequel :
- la figure 1 représente une vue schématique en coupe transversale d'un navire illustrant une application de l'invention à l'assemblage de superstructures composites sur une coque métallique de navire,
- la figure 2 est un agrandissement du détail B de la figure 1 pour une structure du type monolithique,
- la figure 3 est un agrandissement du détail B de la figure 1 pour une structure du type sandwich,
- la figure 4 est une vue du détail B de la figure 4 avec boulonnage complémentaire,
- la figure 5 est une vue du détail B de la figure 5 avec boulonnage complémentaire.

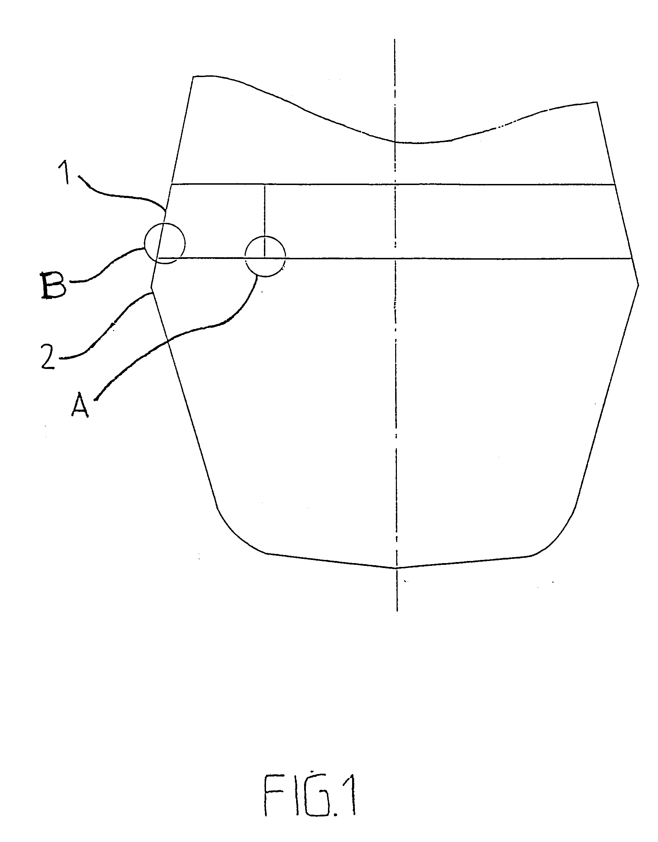

Sur la figure 1 on a représenté de façon schématique en coupe transversale un navire pour illustrer l'application de l'invention à l'assemblage de superstructures composites 1 sur une coque métallique de navire 2.

Il est important de noter que l'application du dispositif et procédé selon l'invention à l'assemblage de superstructures composites sur une coque métallique de navire est donnée à titre d'illustration et que l'on peut fort bien concevoir d'autres applications dans le domaine du génie civil par exemple sans sortir du cadre de l'invention.

Plus généralement l'invention peut être appliquée à tous les cas d'assemblages hétérogènes de matériaux composites et de pièces métalliques.

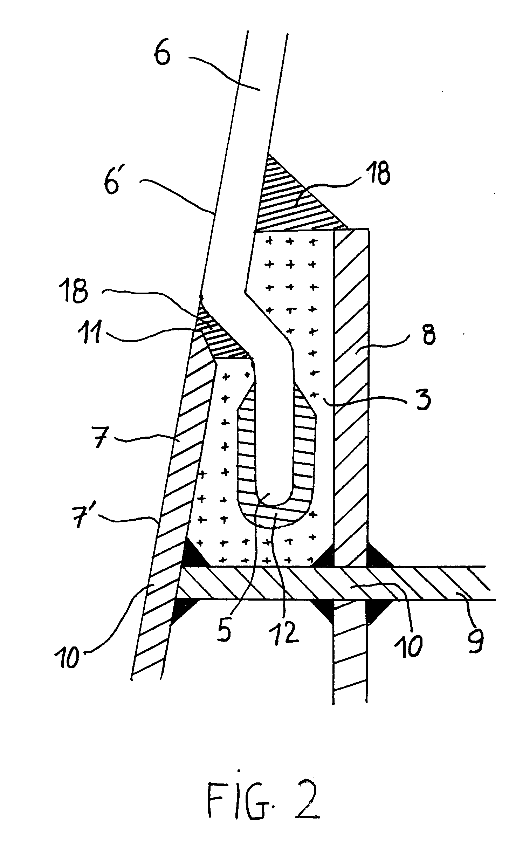

Les assemblages présentés de façon schématique sur la figure 1 sont représentés en vue détaillée sur les figures 2 à 5.

Sur la figure 2 on voit la structure composite désignée sous le signe de référence 6 est drapée à son extrémité ancrée 5, pour donner un épaulement double 12, de strates supplémentaires en forme de U composées avantageusement d'un complexe de matériaux composites monolithiques réalisé en fibres de verre, de carbone ou d'aramide imprégnées de résine.

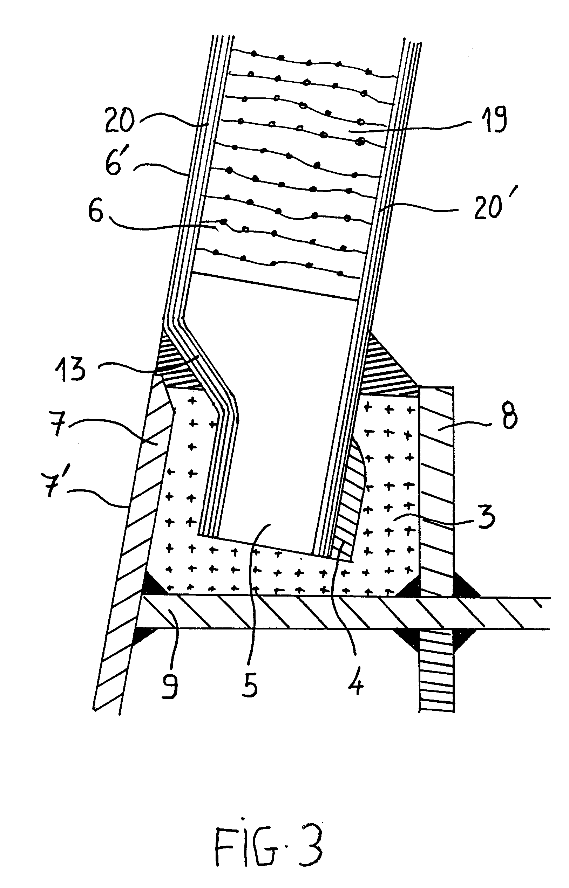

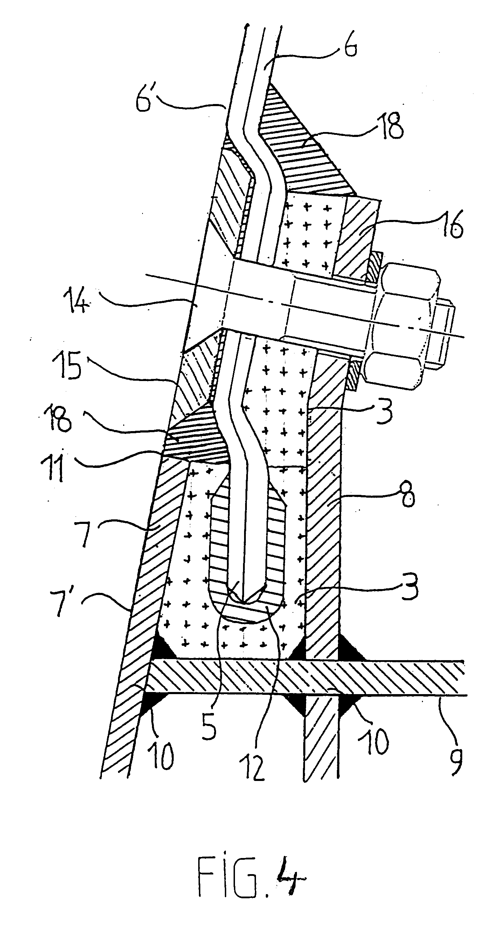

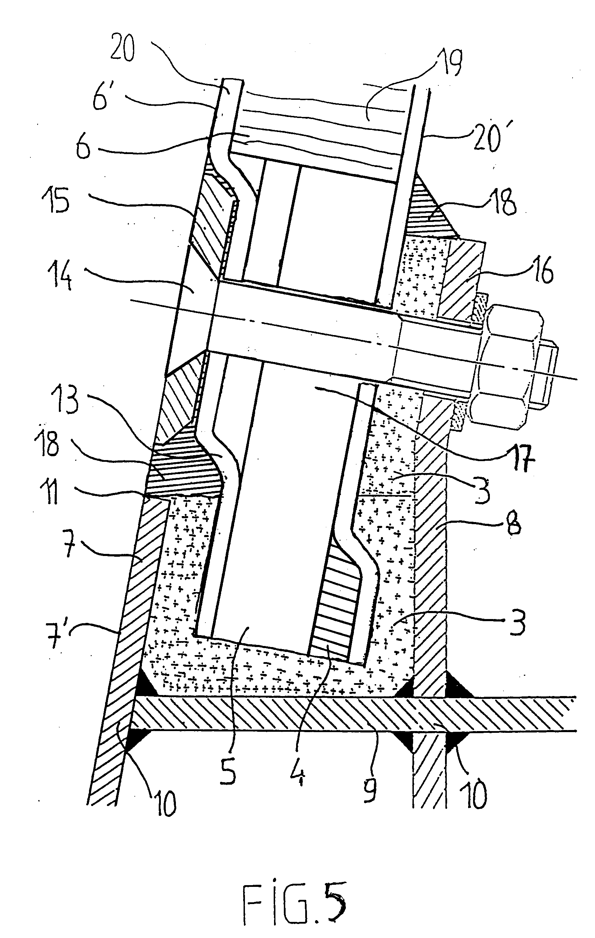

La structure composite 6 si elle est du type monolithique comme représentée sur les figures 2 et 4 peut elle aussi être préférentiellement réalisée de cette manière. Dans le cas d'une structure composite 6 du type sandwich tel que le montrent les figures 3 et 5, cette structure comporte une âme 19 généralement en balsa ou en mousse de polychlorure de vinyle collée en sandwich entre deux peaux en fibre de verre, de carbone ou d'aramide imprégnées de résine 20 et 20'.

La structure composite 6 avec l'épaulement double 12 ainsi obtenu est calée au moyen d'une matière coulée durcissable 3 entre les deux profilés métalliques 7 et 8 solidaires de la structure métallique 9 par exemple par soudure, la structure composite 6 est ainsi ancrée idéalement sur la structure métallique 9.

En effet, on bénéficie de par cette réalisation d'un double coincement, d'une part de la structure composite 6 par l'intermédiaire de l'épaulement double 12 dans la matière coulée durcissable 3, d'autre part de cette même matière entre les deux profilés 7 et 8 ce qui conduit à une forte résistance à l'arrachement.

En outre, l'ancrage par ce double coincement sera effectif même en utilisant une matière coulée durcissable 3 n'adhérant pas, soit à la structure composite 6, soit aux profilés métalliques 7 et 8 ou encore à la structure métallique 9.

Cette matière coulée durcissable 3 est choisie de telle sorte à présenter une fluidité maximale lors de la coulée et une résistance mécanique élevée après durcissement. Dans ce but, on peut employer une résine, par exemple époxy ou polyester, résine éventuellement chargée de microbilles de verre mais également tout genre de mortier tel que ciment, béton ou plâtre.

La jonction entre les profilés métalliques 7 et 8 et la structure composite 6 est recouverte d'un produit d'étanchéité 18 pour des considérations d ambiance extérieure (hygiène, hygrométrie ou protection contre les rayons ultra-violet) mais aussi pour permettre si nécessaire la pressurisation optimale de pièces dont les cloisons seraient formées de la structure composite 6.

La structure composite 6 est épaulée doublement par un drapage composite en forme de U pour la structure composite 6 du type monolithique tel que montré sur la figure 2 alors que la figure 3 représente un épaulement unique 4 en matériaux composites monolithiques pour une structure composite 6 du type sandwich.

Il est à noter que pour le dernier cas, l'âme 19 de la structure sandwich n'est pas prolongée jusqu'à l'extrémité ancrée 5 de cette structure, cette dernière étant préférentiellement composée de matériaux composites du type monolithique.

Cet épaulement unique 4 ou double 12 est calé par l'intermédiaire de la matière coulée durcissable 3 entre les deux profilés 7 et 8 solidaires de la structure métallique 9 et dont l'un des deux 7 est incliné vers le second vertical 8 afin d'assurer le deuxième coincement.

Ce genre de réalisation se révèle particulièrement intéressant dans les liaisons au niveau du bordé incliné de coques de navire, tel que représenté sur le détail B de la figure 1.

De plus pour assurer une continuité de forme, la structure composite 6 du type monolithique s'écarte avant son extrémité ancrée 5 vers l'intérieur pour assurer la coplanéité de la surface extérieure 6' de la structure en matériaux composites du type monolithique et de la surface extérieure 7' du profilé métallique incliné 7 tel que montré sur la figure 2.

De manière semblable, tel que représenté sur la figure 3, la structure en matériaux composites 6 du type sandwich comporte un rétrécissement 13 avant son extrémité ancrée 5 toujours composée de matériaux composites monolithiques, pour assurer à nouveau la coplanéité de la surface extérieure 6' de la structure en matériaux composites 6 du type sandwich et de la surface extérieure 7' du profilé métallique incliné 7.

Cela est très utile notamment dans le cas d'applications militaires, la surface extérieure ne présentant plus de relief inacceptable pour la signature équivalente radar.

Les jonctions restantes entre les profilés métalliques 7,8 et la structure composite 6 sont encore comblées avec le produit d'étanchéité 18.

Dans le cas des figures 4 et 5, il est présenté des réalisations qui sont respectivement les variantes avec boulonnage 14 des réalisations des figures 2 et 3.

Ce boulonnage 14 peut si nécessaire consolider l'ancrage en enserrant une portion 17 du type monolithique de la structure composite 6 entre un prolongement 16 du profilé métallique vertical 8 et une contre plaque usinée en contre-dépouille 15, la partie intercalaire étant remplie avec la matière coulée durcissable 3.

Mais ce boulonnage 14 sert surtout au positionnement et au maintien provisoire de la structure composite 6 entre les deux profilés métalliques incliné 7 et vertical 8 et la structure métallique 9 avant la coulée de matière coulée durcissable 3.

A cet effet il pourrait très bien être remplacé par exemple par des vis non traversantes après durcissement de la matière coulée durcissable 3.

En outre il peut permettre grâce à la contre plaque usinée en contre-dépouille 15 collée à la structure composite 6 et entourant la tête du boulonnage 14 d'assurer une continuité de forme entre la surface extérieure 7' du profilé métallique incliné 7 et la surface extérieure 6' de la structure composite 6.

Dans le cas présent, cette contre plaque 15 évite aussi toute possibilité de fluage du produit d'étanchéité 18, la structure composite 6 épousant dans ce but au mieux la forme trapézoïdale de la face interne de la contre plaque usinée en contre-dépouille 15.

Pour réaliser un élément de structure tel que présenté sur les figures 4 ou 5 par exemple pour l'assemblage de superstructures en matériaux composites 1 sur une coque métallique de navire 2 on commence par prépercer les superstructures en matériaux composites 1 et le prolongement 16 du profilé métallique vertical 8.

De telles superstructures pour navires ont en général une longueur d'environ 50 mètres pour une masse finale de toutes les superstructures non aménagées avoisinant les 100 tonnes.

On vient après positionner en hauteur et largeur les superstructures composites 1 entre les profilés métalliques incliné 7 et vertical 8 et la structure métallique 9 composant le bordé métallique du navire, avec le boulonnage 14.

Puis on effectue une première coulée de matière coulée durcissable 3 à hauteur du profité métallique incliné 7, suivie d'une deuxième coulée à hauteur du prolongement métallique 16 du profité métallique vertical 8, après retrait du boulonnage 14.

On utilise ici comme matière coulée durcissable 3, de la résine connue commercialement sous le nom de "Urethane Acrylate Crestomer 1152 PA".

Le prolongement 16 peut ensuite être contre percé, si l'on désire remettre en place un boulonnage 14, après solidification de la matière coulée durcissable 3.

Ensuite, le produit d'étanchéité 18 est mis en place, la contre plaque usinée en contre-dépouille 15 étant également enduite.

Finalement, cette contre plaque 15 est alors montée avec le boulonnage 14 ou des vis non traversantes.

Sans sortir du cadre de l'invention, le procédé peut être appliqué à tout assemblage de ponts ou cloisons ou plus généralement à celui de modules de transport ou cadres en matériaux composites avec un plancher en matériau métallique.

## Revendications

1. Dispositif d'ancrage d'une structure en matériaux composites du type monolithique sur une structure métallique, comportant au moins un épaulement (4), pratiqué sur l'extrémité ancrée (5) d'une structure en matériaux composites (6), calé au moyen d'une matière coulée durcissable (3) entre deux profilés métalliques (7), (8) solidaires d'une structure métallique (9) à l'une de leur extrémité (10) et convergents vers leur autre extrémité libre (11) par inclinaison d'au moins un des deux profilés (7) vers le second vertical (8), la structure en matériaux composites (6) du type monolithique s'écartant avant son extrémité ancrée (5) vers l'intérieur pour assurer la coplanéité de la surface extérieure (6') de la structure en matériaux composites (6) du type monolithique et de la surface extérieure (7') du profilé métallique incliné (7).

2. Dispositif d'ancrage d'une structure en matériaux composites du type sandwich sur une structure métallique, comportant au moins un épaulement (4), pratiqué sur l'extrémité ancrée (5) d'une structure en matériaux composites (6), calé au moyen d'une matière coulée durcissable (3) entre deux profilés métalliques (7), (8) solidaires d'une structure métallique (9) à l'une de leur extrémité (10) et convergents vers leur autre extrémité libre (11) par inclinaison d'au moins un des deux profilés (7) vers le second vertical (8), la structure en matériaux composites (6) du type sandwich comportant un rétrécissement (13) avant son extrémité ancrée (5) composée de matériaux composites monolithiques, pour assurer la coplanéité de la surface extérieure (6') de la structure en matériaux composites (6) du type sandwich et de la surface extérieure (7') du profilé métallique incliné (7).

3. Dispositif d'ancrage selon la revendication 1 ou 2, caractérisé en ce que la matière coulée durcissable (3) est une résine, une résine chargée ou un mortier.

4. Dispositif d'ancrage selon l'une des revendication 1 à 3, caractérisé en ce que la structure en matériaux composites (6) comporte à son extrémité ancrée (5) un épaulement double (12) par drapage avec des strates de matériaux composites monolithiques en forme de U.

5. Dispositif d'ancrage selon l'une des revendications 1 ou 2, caractérisé en ce que l'extrémité ancrée (5) est positionnée par rapport au profilé incliné (7), au profilé vertical (8) et à la structure métallique (9), au moyen d'un boulonnage (14) entre une contre plaque usinée en contre-dépouille (15) et un prolongement (16) du profilé métallique vertical(8) enserrant une portion (17) du type monolithique de la structure en matériaux composites (6).

6. Application du dispositif d'ancrage selon l'une quelconque des revendications 1 à 5, a l'assemblage de superstructures en matériaux composites (1) sur une coque métallique (2) de navire.

7. Application du dispositif d'ancrage selon l'une quelconque des revendications 1 à 5, a l'assemblage de superstructures métalliques sur une coque de navire en matériaux composites.

8. Application du dispositif d'ancrage selon l'une quelconque des revendications 1 à 5, à des modules de transport ou cadres en matériaux composites avec un plancher en matériau métallique.

9. Procédé de réalisation du dispositif d'ancrage selon la revendication 6, caractérisé en ce qu'il comporte les étapes successives suivantes :
- positionnement des superstructures composites (1) prépercées par rapport aux profilés métalliques incliné (7) et vertical (8) et à la structure métallique (9) composant le bordé métallique du navire au moyen du boulonnage (14),
- première coulée de matière coulée durcissable (3) à hauteur du profilé métallique incliné (7),
- seconde coulée après retrait du boulonnage (14), à hauteur du prolongement (16) du profilé métallique vertical (8),
- éventuellement contre perçage suivant les superstructures du prolongement (16) du profilé métallique vertical (8),
- mise en place du produit d'étanchéité (18),
- éventuellement remise en place du boulonnage (14) avec la contre plaque usinée en contre-dépouille (15).

## Claims

1. Device for anchoring a monolithic type structure in composite material to a metal structure, comprising at least a bulge (4) made on the anchored end (5) of a composite material structure (6), fastened, by means of a hardenable cast material (3), between two metal sections (7), (8) interdependent of a metal structure (9) at one of their end (10) and convergent towards their other free end (11) at least one of the two sections (7) being inclined towards the second vertical section (8), the monolithic type composite material structure (6) deviating before its anchored end (5) towards the inside to ensure the coplaneness of the external surface (6') of the monolithic type composite material structure (6) and the external surface (7') of the inclined metal section (7).

2. Device for anchoring a sandwich type structure in composite material to a metal structure, comprising at least a bulge (4) made on the anchored end (5) of a composite material structure (6), fastened, by means of a hardenable cast material (3), between two metal sections (7), (8) interdependent of a metal structure (9) at one of their end (10) and convergent towards their other free end (11), at least one of two sections (7) being inclined towards the second vertical section (8) the sandwich type composite material structure (6) comprising a contraction (13) before its anchored end (5) made up of monolithic composite materials to ensure the coplaneness of the external surface (6') of the sandwich type composite material structure (6) and the external surface (7') of the inclined metal section (7).

3. Anchoring device according to claims 1 or 2, characterized in that the hardenable cast material (3) is a resin, a charged resin or a motar.

4. Anchoring device to any of claims 1 to 3, characterized in that the composite material structure (6) comprises at its anchored end (5) a double bulge (12) made by draping with U-shaped layers of monolithic composite material.

5. Anchoring device according to one of claims 1 or 2, characterized in that, the anchored end (5) compared to the inclined section (7), to the vertical section (8) and to the metal structure (9) is positioned by means of bolting (14) between a undercut machined backplate (15) and a prolongation (16) of the vertical metal section (8) enclosing a portion (17) of the monolithic composite material structure (6).

6. Device according to anyone of the claims 1 to 5, characterized in that it is applied to the assembly of composite material superstructures (1) to a ship's metal hull (2).

7. Device according to anyone of the claims 1 to 5, characterized in that it is applied to the assembly of a metal superstructure to a ship's hull made of composite materials.

8. Device according to anyone of the claims 1 to 5, characterized in that it is applied to the assembly of decks or bulkheads.

9. Process of realisation of an anchoring device according to claim 6, characterized in that it comprises the following successive stages :
- positioning of prebored composite superstructures (1) compared to the inclined metal section (7) and vertical metal section (8) and to the metal structure (9) constituting the metal plating of the ship by means of bolting (14),
- first casting of the hardenable cast material (3) at the height of inclined metal section (7),
- second casting after withdrawal of bolting (14), at the height of prolongation (16) of the vertical metal section (8),
eventually counter-drilling following the superstructures of the prolongation (16) of vertical metal section (8),
- installation of the sealing compoud (18),
- possible reinstallation of bolting (14) with undercut machined backplate (15).

## Patentansprüche

1. Verankerungsvorrichtung einer Verbundwerkstoffstruktur monolithischen Typs an einer Metallstruktur vor, die zumindest einen Ansatz (4) am verankerten Ende (5) einer Verbundwerkstoffstruktur (6) aufweist und mittels eines zwischen zwei Metallprofilen (7,), (8) gegossenen Härtemittels (3) verkeilt ist, wobei diese Metallprofile an einem ihrer Enden (10) mit einer Metallstruktur (9) verbunden und an ihrem anderen, freien Ende (11) konvergierend sind, durch die Neigung von zumindest eines der beiden Profile (7) zum zweiten vertikalen (8), wobei sich die monolithische Verbundwerkstoffstruktur (6) vor ihrem verankerten Ende (5) nach innen abspreizt, um die Koplanheit der Aussenseite (6') der monolithischen Verbundwerkstoffstruktur (6) und der Aussenseite (7') des schrägen Metallprofils (7') zu gewährleisten.

2. Verankerungsvorrichtung einer Verbundwerkstoffstruktur des Typs Sandwich an einer Metallstruktur vor, die zumindest einen Ansatz (4) am verankerten Ende (5) einer Verbundwerkstoffstruktur (6) aufweist und mittels eines zwischen zwei Metallprofilen (7), (8) gegossenen Härtemittels (3) verkeilt ist, wobei diese Metallprofile an einem ihrer Enden (10) mit einer Metallstruktur (9) verbunden und an ihrem anderen, freien Ende (11) konvergierend sind, durch die Neigung von zumindest eines der beiden Profile (7) zum zweiten vertikalen (8), wobei die Verbundwerkstoffstruktur (6) des Typs Sandwich vor ihrem verankerten, aus monolithischen Verbundwerkstoffen bestehenden Ende (5) eine Verengung (13) aufweist, um die Koplanheit der Aussenseite (6') der Verbundwerkstoffstruktur (6) vom Typ Sandwich und der Aussenseite (7') des schrägen Metallprofils (7') zu gewährleisten.

3. Verankerungsvorrichtung nach Anspruch 1 oder 2, dadurch gekennzeichnet, dass es sich bei dem Härtemittel (3) um ein Harz, ein Hartharz oder einen Mörtel handelt.

4. Verankerungsvorrichtung nach einem der Ansprüche 1 bis 3, dadurch gekennzeichnet, dass die Verbundwerkstoffstruktur (6) an ihrem verankerten Ende (5) einen doppelten Ansatz (12) aufweist, der mittels Verstreckung mit den Schichten der monolithischen Verbundwerkstoffe in U-Form hergestellt wird.

5. Verankerungsvorrichtung nach einem der Ansprüche 1 oder 2, dadurch gekennzeichnet, dass das verankerte Ende (5) in bezug auf das schräge Profil (7), das vertikale Profil (8) und die Metallstruktur (9) mittels Vernagelung (14) zwischen einer hinterschnittenen Gegenplatte (15) und einer Verlängerung (16) des vertikalen Metallprofils (8), das einen Abschnitt (17) des monolithischen Typs der Verbundwerkstoffstruktur (6) umfasst, positioniert.

6. Anwendung der Verankerungsvorrichtung nach einem der Ansprüche 1 bis 5 auf das Zusammenfügen von Oberbauten aus Verbundwerkstoffen (1) mit einem Metallschiffsrumpf (2).

7. Anwendung der Verankerungsvorrichtung nach einem der Ansprüche 1 bis 5 auf das Zusammenfügen von Metalloberbauten an einem Schiffsrumpf aus Verbundwerkstoff.

8. Anwendung der Verankerungsvorrichtung nach einem der Ansprüche 1 bis 5 auf Transportmodule oder Verbundwerkstoffrahmen mit einem Metallboden.

9. Herstellungsverfahren der Verankerungsvorrichtung nach Anspruch 6, dadurch gekennzeichnet, dass es aus nachstehenden, aufeinanderfolgenden Etappen besteht:
- Positionierung der vorgebohrten Oberbauten aus Verbundwerkstoff (1) in bezug auf das schräge (7) und vertikale (8) Metallprofil und auf die die Metallbeplankung des Schiffs bildende Metallstruktur (9) mittels Vernagelung (14),
- erster Guss des Härtemittels (3) am schrägen Metallprofil (7),
- zweiter Guss nach Entfernung der Vernagelung (14) an der Verlängerung (16) des vertikalen Metallprofils (8),
- ggfs. Gegenbohrung nach den Oberbauten der Verlängerung (16) des vertikalen Metallprofils (8),
- Einsetzen des Dichtungsprodukts (18),
- ggfs. erneute Vernagelung (14) mit der hinterschnittenen Gegenplatte (15).
